# EUROPÄISCHE PATENTSCHRIFT

(11) **EP 1 397 843 B1**
(45) Veröffentlichungstag und Bekanntmachung des Hinweises auf die Patenterteilung: **17.05.2006**
(21) Anmeldenummer: 01989429.4
(22) Anmeldetag: 27.10.2001
(51) Int. Cl.: H01M 8/24, H01M 8/06, H01M 8/00, F24H 1/00

(54) **UNTERDRUCKKAMMER FÜR BRENNSTOFFZELLENANLAGE**
LOW-PRESSURE CHAMBER FOR A FUEL CELL SYSTEM
CHAMBRE DE DEPRESSION POUR INSTALLATION A PILES A COMBUSTIBLE

(30) Priorität: 31.10.2000 DE 10054500; 02.11.2000 AT 18572000
(43) Veröffentlichungstag der Anmeldung: 17.03.2004
(73) Patentinhaber: Vaillant GmbH, 42859 Remscheid (DE)
(72) Erfinder: HOCKER, Thomas, 42857 Remscheid (DE); BERG, Joachim, 42859 Remscheid (DE); BIELSKI, Martin, 87600 Kaufbeuren (DE); KEHL, Reinhold, 42929 Wermelskirchen (DE); PAULUS, Jochen, 42655 Solingen (DE); WAGNER, Kerstin, 42929 Wermelskirchen (DE)
(74) Vertreter: Hocker, Thomas
(86) Internationale Anmeldenummer: PCT/EP2001/012458
(87) Internationale Veröffentlichungsnummer: WO 2002/037595

(56) Entgegenhaltungen:
- EP-A- 1 039 244
- WO-A-00/54354
- DE-A- 10 000 405
- DE-A- 19 947 879
- DE-A- 19 948 214
- JP-A- 1 030 175
- JP-A- 1 320 775

## Beschreibung

Die Erfindung bezieht sich auf ein Verfahren zur Wirkungsgradsteigerung und Gefahrenvermeidung bei Brennstoffzellenanordnungen.

Bei bekannten konventionellen Heizungsanlagen werden die heißen und Teile der kalten brenngas- bzw. abgasführenden Teile von einem Gehäuse umgeben. In diesem Gehäuse befindet sich ein Gebläse, das die Verbrennungsluft von außerhalb des Gehäuses für den Heizungsbrenner ansaugt und dem Brenner zuführt. Hierbei entsteht ein Unterdruck innerhalb dieses Gehäuses im Vergleich zur Umgebung, weshalb man das Gehäuse als Unterdruckkammer bezeichnet. Während des Betriebs der Heizungsanlage können somit keine Gase aus der Unterdruckkammer in die Umgebung gelangen.

Die Unterdruckkammer erfüllt vorwiegend zwei Aufgaben. Zum einen wird Wärme der Komponenten in der Unterdruckkammer an die Luft, welche aus der Umgebung durch die Unterdruckkammer und das Gebläse in den Brenner gelangt, übertragen. Hierdurch bleibt diese thermische Energie in der Heizungsanlage, Wärmeverluste an die Umgebung werden minimiert und der thermische Wirkungsgrad der Heizungsanlage gesteigert. Andererseits können bei eventuellen Undichtigkeiten der brenngas- oder abgasführenden Teile keine Gase in die Umgebung gelangen und somit dort befindliche Personen gefährden.

Diese Gase stellen eine Gefährdung für Personen dar, da Brenngas explosiv und Abgase - zumindest in größeren Konzentrationen - giftig sind. Treten aus brenngas- oder abgasführenden Teilen Gase aus, so können diese aufgrund des Unterdrucks in der Unterdruckkammer nicht in die Umgebung gelangen, werden mit der bereits erwähnten nachströmenden Luft für den Brenner vermischt und verbleiben in der Heizungsanlage. Somit führen kleine Leckagen zu keiner Beeinträchtigung der Sicherheit.

Die DE 199 47 879 A1 und DE 100 00 405 A1 zeigen jeweils eine Brennstoffzellen-Anlage, die in einem Gehäuse untergebracht ist. Den beiden Schriften ist nicht zu entnehmen, wie dieses Gehäuse vorteilhaft gestaltet sein sollte. Die Abgase einer Brennstoffzelle werden primärseitig in einen Wärmeaustauscher geleitet, der sekundärseitig unmittelbar mit einer Heizungsvorlauf- und Heizungsrücklaufleitung verbunden ist. Demzufolge handelt es sich um Hochtemperatur-Brennstoffzellen, die zwischen 850°C und 1000°C betrieben werden und deren Abwärme durch Abkühlen des Abgases genutzt wird.

Demgegenüber werden Niedertemperatur-Brennstoffzellen zwischen 75°C und 120°C betrieben und können direkt flüssig gekühlt werden, jedoch ist es - aufgrund der elektrischen Leitfähigkeit von Heizungswasser - nicht möglich, den internen Wärmeaustauscher der Brennstoffzelle unmittelbar mit einem Heizkreislauf zu kühlen.

In DE 199 10 695 C1 ist ein Verfahren zum Betreiben einer Brennstoffzellenanlage beschrieben, bei dem Luft in ein die Brennstoffzellenanlage umgebendes Gehäuse einströmt und die abgestrahlte Wärme der Komponenten der Brennstoffzellenanlage aufnimmt. Hierbei befinden sich heiße Bauteile in strömungstechnischen Totwassergebieten und können daher lediglich Wärme in Form von Strahlung, nicht jedoch konvektiv abgeben. Bei der Strahlungswärme Q̇_{S} gehen die Temperatur des strahlenden Mediums T_{Strahler} und des absorbierenden Mediums T_{Empfänger} in der 4. Potenz ein.

Konvektive Wärmeleitung ist linear abhängig von der Temperaturdifferenz zwischen dem kühlenden und zu kühlenden Medium sowie der Wärmeübertragungsfläche. Desweiteren wird sie vorwiegend durch die Strömungsgeschwindigkeit des strömenden Mediums und Oberflächeneigenschaften beeinflußt. Konvektiv kann aus Totwassergebieten keine Wärme abgeleitet werden.

Zusätzlich besteht die Gefahr, dass bei einem Verfahren gemäß DE 199 10 695 C1 beispielsweise Leckagen von wasserstoffführenden Komponenten dazu führen, dass sich in den Totwassergebieten ein zündfähiges Gemisch bildet. Wasserstoff ist in Luft bereits bei Raumtemperatur in Konzentrationen zwischen 4 und 72 % zündfähig; bei Temperaturerhöhung ist ein Wasserstoff-Luft-Gemisch noch leichter entzündbar. Somit können sich bei einem derartigen Verfahren in einem Totwassergebiet bereits kleine Mengen Wasserstoff entzünden.

Ziel der Erfindung ist es, die Unzulänglichkeiten bekannter Verfahren zum Betreiben einer Brennstoffzellenanordnung zu vermeiden und ein Verfahren der eingangs erwähnten Art vorzuschlagen, das eine Kühlung von Komponenten einer Brennstoffzellenanlage bei gleichzeitiger Steigerung des Wirkungsgrades ermöglicht und zugleich eine Beeinträchtigung der Sicherheit bei Leckagen von brenngas- oder abgasführenden Komponenten der Brennstoffzellenanlage vermeidet.

Bei den meisten Brennstoffzellentypen, insbesondere bei Polymer-Membran-Brennstoffzellen (PEM oder PEFC), wird Wasserstoff mit Sauerstoff elektrochemisch zu Wasserdampf umgewandelt. Da die Reaktion exotherm ist, wird Energie frei. In diesem Fall entsteht elektrischer Strom und Wärme. Diese Wärme kann zu Heizzwecken genutzt werden. PEM-Brennstoffzellen arbeiten bei einer Betriebstemperatur von ca. 80°C.

Da Wasserstoff, der zum Betrieb der Brennstoffzellen benötigt wird, ein Sekundärenergieträger ist, müssen Brennstoffzellenanlagen vorzugsweise entweder mit reinem Wasserstoff z.B. aus Tanks oder einem wasserstoffhaltigen Gas aus einem Reformer versorgt werden. Bei einem solchen Reformer wird vorzugsweise Erdgas oder Methanol bei Temperaturen meist über 600°C unter Zugabe von Luft und bzw. oder Wasserdampf zu einem wasserstoffhaltigen Gas umgewandelt. Bei dieser Umwandlung entsteht als Zwischenprodukt Kohlenmonoxid CO in relativ hohen Konzentrationen. Kohlenmonoxid ist sehr giftig, da es zu den roten Blutkörperchen eine höhere Affinität besitzt als Sauerstoff. Wasserstoff besitzt die Eigenschaft, dass es in einem sehr großen Bereich mit Luft zündfähig ist und zudem bereits bei sehr niedrigen Temperaturen entzündet werden kann. Aus diesem Grund muß vermieden werden, dass bei Brennstoffzellenanlagen Wasserstoff oder Kohlenmonoxid aus der Brennstoffzellenanlage gelangt und zu einer Beeinträchtigung der Sicherheit führen könnten.

Erfindungsgemäß wird dies durch ein Verfahren gemäß des unabhängigen Anspruchs 1 erreicht. Des wird z.B. dadurch , dass sich zumindest der Reformer und die Brennstoffzelle in einer Unterdruckkammer befinden und hierbei von der für die Reaktionen benötigten Luft umströmt werden, wodurch Gase aus den Komponenten der Brennstoffzellenanlage nicht in die Umgebung gelangen können und stattdessen im System verbleiben. Hierbei wird auch konvektiv Wärme von den Komponenten auf die Luft übertragen. Befinden sich auch weitere Komponenten der Brennstoffanlage wie beispielsweise Lüfter, Pumpen, Kühlkörper, etc. in der Unterdruckkammer, so können auch diese konvektiv Wärme auf den Luftstrom übertragen.

Der konvektive Wärmeübergang ist besonders hoch bei hohen Strömungsgeschwindigkeiten, da hierbei die Reynolds-Zahl Re und der einer Leckage einer brenngasführenden Komponente in der Unterdruckkammer nur eine kleine Menge Brenngas-Luft-Gemisch bilden; bei einer Entzündung dieses Gemischs würde nur wenig Energie frei, wodurch eine Gefährdung der Umgebung ausgeschlossen ist. Zudem wird die Strömungsgeschwindigkeit der Luft in der Unterdruckkammer erhöht, was den konvektiven Wärmeübergang begünstigt. Ferner werden Totwassergebiete, in denen warme oder brenngasreiche Luft verweilt, vermieden.

Wärmeübergangskoeffizient α ansteigen. Wird erfindungsgemäß das Volumen der Unterdruckkammer abzüglich der darin befindlichen Komponenten klein gehalten, so wird die Strömungsgeschwindigkeit hoch, wodurch es zu einer besonders guten Kühlung der Komponenten kommt. Darüber hinaus kann sich nur ein geringe Menge Wasserstoff oder Kohlenmonoxid darin sammeln. Käme es zu einer Verpuffung, was durch geeignete Maßnahmen verhindert werden muß, jedoch nicht gänzlich ausgeschlossen werden kann, so kann eine geringe Menge Wasserstoff bzw. Kohlenmonoxid höchsten einen Schaden im Gerät, nicht jedoch in der Umgebung verursachen. Eine große Menge Wasserstoff könnte demgegenüber einen nennenswerten Schaden anrichten.

Erfindungsgemäß wird bei einem Verfahren gemäß des unabhängigen Anspruchs 1 erreicht, dass die Wärmeverluste einer Brennstoffzellenanordnung minimiert und die Betriebssicherheit erhöht werden.

Durch die Merkmale des Anspruchs 1 wird ferner erreicht, dass das Volumen der Unterdruckkammer unter Berücksichtigung des Volumens der Komponenten der Brennstoffzellenkomponenten in der Unterdruckkammer gering ist. Hierdurch kann sich bei Gemäß den Merkmalen des Anspruchs 1 werden alle Komponenten in der Unterdruckkammer umströmt, um ihre Kühlung und Sicherheit zu gewährleisten.

Da Wärme stets nur von einem warmen auf ein kälteres Medium übergehen kann, wird durch die Merkmale des Anspruchs 1 erreicht, dass die Luft zunächst Wärme von den kälteren Komponenten wie z.B. der Pumpe des internen Kühlkreislaufs und dann von den wärmeren Komponenten wie z.B. dem Reformer aufnimmt. Eine Durchströmung von den warmen zu den kühleren Komponenten hätte zur Folge, dass u.U. die kühleren Komponenten nicht gekühlt werden könnten, im schlimmsten Fall sogar von der angewärmten Luft geheizt würden.

Die Merkmale des Anspruchs 2 ergeben den Vorteil, dass kompakt durch eine innere Kühlung direkt im Brennstoffzellenstapel Wärme auf einen Kühlkreislauf übergeht. Dies reduziert das Bauvolumen und mindert mögliche Wärmeverluste. Die interne Kühlung des Brennstoffzellenstapels nimmt auch Wärme auf, die durch die Vorwärmung der Verbrennungsluft in die Brennstoffzelle gelangt. Nach wie vor ist im Abgas der Brennstoffzelle thermische Energie enthalten.

Gemäß Anspruch 3 besteht der Brennstoffzellenstapel aus PEM-Brennstoffzellen, die häufig über eine interne Kühlung verfügen.

Durch die Merkmale des Anspruchs 4 kann erreicht werden, dass die Wärmeverluste der Unterdruckkammer an die Umgebung minimiert werden.

Konvektive Wärmeübertragung kann frei und bzw. oder erzwungen erfolgen. Während die erzwungene Konvektion vorzugsweise durch die erzwungene Gasströmungen in und um die Komponenten in der Unterdruckkammer entsteht, wird freie Konvektion z.B. durch Temperatur- bzw. Dichteunterschiede in den Medium verursacht.

Im inneren Kühlkreislauf der Brennstoffzelle zirkuliert ein Kühlmittel aus vorzugsweise synthetischen Kohlenwasserstoffen, die nicht elektrisch leitfähig sind und somit keinen Kurzschluß zwischen den Brennstoffzellen verursachen.

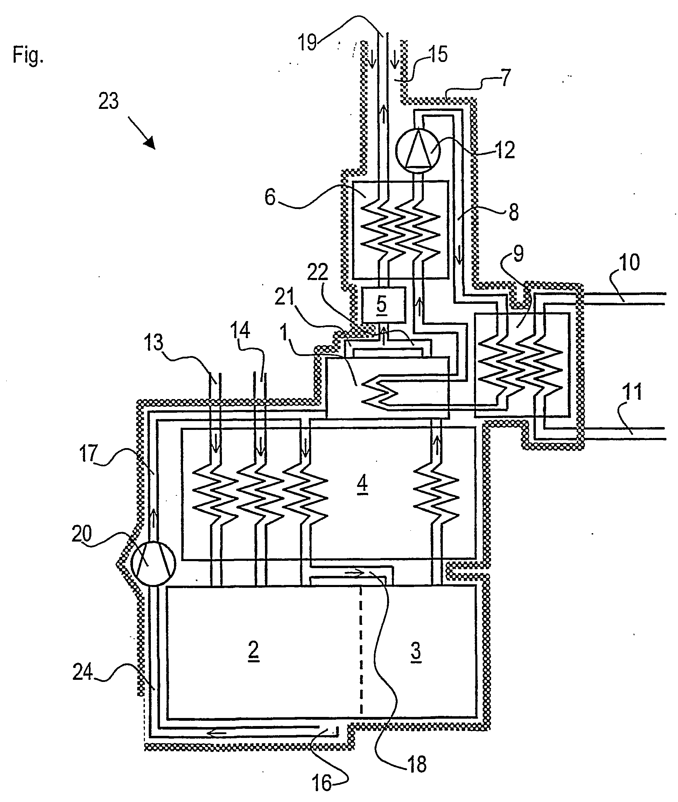

Die Erfindung wird nun anhand der Zeichnung näher erläutert. Dabei zeigt:
die Figur eine Brennstoffzellenanordnung

In der Figur ist der Aufbau einer Brennstoffzellenanordnung 23 vereinfacht dargestellt. Diese verfügt u.a. über einen Brennstoffzellenstapel 1, einen Reformer 2 inklusive CO-Feinreinigung 3, den Wärmeaustauschern 4, 6 und 9, einem internen Kühlkreislauf 8 inklusive Pumpe 12, einem katalytischen Nachbrenner 5, einem Gebläse 20, einem Leitungssystem, das die Komponenten miteinander verbindet und auf das noch im folgenden Text ausführlicher eingegangen wird, eine Unterdruckkammer 7 sowie einige nicht dargestellten Komponenten wie beispielsweise einen Inverter, eine Regelung, einen Kondensatablauf und einen Schwefelfilter.

Luft zum Betrieb der Brennstoffzellenanordnung 23 wird aufgrund der Saugleistung eines Gebläses 20 durch das äußere eines koaxialen Rohres, die Luftzuführung 15 in die Unterdruckkammer 7 gesaugt und umströmt die Komponenten der Brennstoffzellenanordnung 23. Hierbei nimmt die Luft Wärme von diesen Komponenten sowie Gase aus eventuellen Leckagen auf. Die erwärmte und eventuell mit Gasen aus Leckagen angereicherte Luft strömt, nachdem sie die alle relevanten Komponenten umströmt hat, durch eine Öffnung 16 in eine Luftsaugleitung 24 ein und gelangt in das Gebläse 20, von dem es mit Überdruck über eine Luftleitung 17 sowohl zum Brennstoffzellenstapel 1, als auch zu dem Wärmeaustauscher 4 gelangt. In dem Wärmeaustauscher 4 wird die Luft, wie auch das durch die Wasserleitung 13 zugeführte Wasser und das durch die Erdgasleitung 14 zugeführte Erdgas, erhitzt und dem Reformer 2 zugeführt. In dem Reformer 2 wird das Erdgas mit dem Wasser, das in dem Wärmeaustauscher 4 in Wasserdampf umgewandelt wurde, und der Luft zu einem wasserstoffhaltigen Gas umgewandelt. Da dieses wasserstoffhaltige Gas noch erhebliche Anteile Kohlenmonoxid enthält, wird in einer zweiten Reformerstufe, der CO-Feinreinigung 3 das Kohlenmonoxid mit Hilfe von Luft, die über eine Zuführung 18 aus dem erwärmten Luftstrom, der den Wärmetauscher 4 verläßt, abgezweigt wird, zu Kohlendioxid aufoxidiert. Das gereinigte wasserstoffhaltige Gas wird im Wärmeaustauscher 4 abgekühlt und gelangt in den Brennstoffzellenstapel, in dem der Wasserstoff zusammen mit Sauerstoff aus der Luftleitung 17 elektrochemisch umgesetzt wird. Der elektrische Strom gelangt in einen nicht dargestellten Inverter, der den Gleichstrom in 230 V Wechselspannung umwandelt. Gleichzeitig wird in dem Brennstoffzellenstapel 1 Wärme auf den internen Kühlkreislauf 8, der über eine eigene Kühlmittelpumpe 12 verfügt, abgegeben. Der Kühlkreislauf enthält ein spezielles Kühlmittel, das im Gegensatz zu (nicht deionisiertem) Wasser nicht elektrisch leitend ist; hierdurch wird ein elektrischer Kurzschluß zwischen den Zellen vermieden. Das Anodenabgas 22 (Brenngasseite) und Kathodenabgas 21 (Luftseite) des Brennstoffzellenstapels 1 wird miteinander vermischt und einem katalytischen Nachbrenner 5 zugeführt, in dem die restlichen brennbaren Bestandteile verbrannt werden. Wärme aus dem Abgas des katalytischen Nachbrenners 5 wird in dem Wärmeübertrager 6 auf den internen Kühlkreislauf 8 übertragen. In einem Wärmeaustauscher 9 wird Wärme des internen Kühlkreislaufs 8 auf einen konventionellen Heizkreislauf übertragen. In der Figur sind lediglich der Rücklauf 11 und Vorlauf 10 des konventionellen Heizkreislaufs dargestellt. Die im Wärmeaustauscher 6 abgekühlten Abgase des katalytischen Nachbrenners 5 gelangen durch eine Abgasleitung 19 in die Umgebung.

Aus der Figur ist deutlich zu erkennen, dass sich die Form der Unterdruckkammer 7 an die Form und Anordnung der Komponenten der Brennstoffzellenanordnung 23 anpaßt, wodurch keine Totwassergebiete und große Volumina Gasgemische in der Unterdruckkammer 7 entstehen können sowie eine hohe Strömungsgeschwindigkeit der Luft gewährleistet ist.

## Patentansprüche

1. Verfahren zum Betreiben einer Brennstoffzellenanordnung (23) in einem gegenüber der Umgebung unter Unterdruck stehenden Gehäuse, einer sogenannten Unterdruckkammer (7), vorzugsweise mit Reformer (2) zur Erzeugung eines wasserstoffhaltigen Gases aus Kohlenwasserstoffen, bei dem Luft für den Betrieb des Brennstoffzellenstapels (1) und gegebenenfalls des Reformers (2) in die Unterdruckkammer (7) geleitet wird, **dadurch gekennzeichnet, dass** die Luft die in der Unterdruckkammer (7) befindlichen Komponenten der Brennstoffzellenanordnung (23) umströmt und dem Brennstoffzellenstapel (1) sowie gegebenenfalls dem Reformer (2) zugeführt wird, diese Luft für den Betrieb des Brennstoffzellenstapels (1) und gegebenenfalls des Reformers (2) konvektiv Wärme von den in der Unterdruckkammer (7) befindlichen Komponenten der Brennstoffzellenanordnung (23) sowie Gase aus eventuell vorhandenen Leckagen der in der Unterdruckkammer (7) befindlichen Komponenten der Brennstoffzellenanordnung (23) aufnimmt und Wärme an einen Kühlkreislauf (8) abgibt und dieser Kühlkreislauf (8) wiederum Wärme an einen Heizkreislauf (10, 11) abgibt, *wobei die Unterdruckkammer (7) die in der Unterdruckkammer (7) befindlichen Komponenten der Brennstoffzellenanordnung (23) mit geringem Abstand umschließt,* in dem sich die Form der Unterdruckkammer (7) an die Form und Anordnung der Komponenten der Brennstoffzellenanordnung (23) anpaßt, wodurch keine Totwassergebiete und große Volumina Gasgemische in der Unterdruckkammer (7) entstehen können sowie eine hohe Strömungsgeschwindigkeit der Luft gewährleistet ist, die Unterdruckkammer (7) derart gestaltet ist, dass die Komponenten in der Unterdruckkammer (7) nacheinander von der Luft umströmt werden und die Luft in der Unterdruckkammer (7) von kalten zu warmen Komponenten der Brennstoffzellenanordnung (23) strömt.

2. Verfahren zum Betreiben einer Brennstoffzellenanordnung (23) gemäß Anspruch 1, **dadurch gekennzeichnet, dass** Wärme, die vorzugsweise aus der elektrochemischen Reaktion in dem Brennstoffzellenstapel (1) und beziehungsweise oder der Vorwärmung der Luft stammt, in dem Brennstoffzellenstapel (1) direkt auf einen internen Kühlkreislauf (8) übergeht.

3. Verfahren zum Betreiben einer Brennstoffzellenanordnung (23) gemäß einem der vorgenannten Ansprüche, **dadurch gekennzeichnet, dass** der Brennstoffzellenstapel (1) PEM-Brennstoffzellen umfaßt.

4. Verfahren zum Betreiben einer Brennstoffzellenanordnung (23) gemäß einem der vorgenannten Ansprüche, **dadurch gekennzeichnet, dass** die Unterdruckkammer (7) gegenüber der Umgebung gedämmt ist.

## Claims

1. A process for the operation of a fuel cell system (23) in a housing which is under negative pressure relative to atmosphere, a so-called vacuum chamber (7), preferably with a reformer (2) for obtaining a hydrogen-containing gas from hydrocarbons, with air for the operation of the fuel cell stack (1) and, as circumstances may require, of the reformer (2) being fed to the vacuum chamber (7), **characterised in that** the said air flows around the component parts of the fuel cell system (23) located in the vacuum chamber (7) and is fed to the fuel cell stack (1) and, as circumstances may require, to the reformer (2), that this air for the operation of the fuel cell stack (1) and, as circumstances may require, of the reformer absorbs heat by convection from the component parts of the fuel cell system (23) located in the vacuum chamber (7), and takes up gases from possibly existing leakages of the component parts of the fuel cell system (23) located in the vacuum chamber (7), and gives off heat to a cooling circuit (8), and this cooling circuit (8), in turn, gives off heat to a heating circuit (10, 11), with the vacuum chamber (7) enclosing the component parts of the fuel cell system (23) located in the vacuum chamber (7) at a small distance **in that** the shape of the vacuum chamber is adapted to the shape of the arrangement of the component parts of the fuel cell system (23), so that no dead water zones and no large-volume gas mixtures can form in the vacuum chamber (7) and a high rate of air flow is ensured, and that the vacuum chamber is designed in such a way that the air flows successively around the component parts located in the vacuum chamber (7) and that the air in the vacuum chamber (7) flows from the cold to the hot components of the fuel cell system (23).

2. A process for the operation of a fuel cell system (23) as claimed in Claim 1, **characterised in that** the heat, which preferably stems from electrochemical reaction in the fuel cell stack (1) and/or from the preheating of the air, is directly transferred to an internal cooling circuit (8) in the fuel cell stack (1).

3. A process for the operation of a fuel cell system (23) as claimed in any of the preceding Claims, **characterised in that** the fuel cell stack (1) comprises PEM fuel cells.

4. A process for the operation of a fuel cell system (23) as claimed in any of the preceding Claims, **characterised in that** the vacuum chamber (7) is insulated against its surroundings.

## Revendications

1. Procédé pour l'utilisation d'une unité à piles à combustible (23) installée dans un boîtier se trouvant à une pression inférieure à celle de l'entourage, soit une chambre dite de dépression (7), de préférence avec un reformeur (2)pour la production d'un gaz hydrogéné à partir d'hydrocarbures, l'air pour la marche de l'ensemble de piles à combustible (1) et, le cas échéant du reformeur (2), étant canalisé dans la chambre de dépression (7), procédé **caractérisé par le fait que** l'air qui lèche les composants de l'unité à piles à combustible (23) et est canalisé vers l'ensemble de piles à combustible (1) et, le cas échéant, le reformeur (2), se charge par convection de chaleur des composants se trouvant dans la chambre de dépression (7) ainsi que des gaz provenant d'éventuelles fuites des composants dans la chambre de dépression de l'unité (23) et cède de la chaleur à un circuit de refroidissement (8) qui cède de la chaleur à un circuit de chauffage (10, 11), la chambre (7) refermant à faible distance les composants de l'unité (23) se trouvant dans la chambre (7), distance dans laquelle la forme de la chambre (7) s'adapte à la forme et à la disposition des composants de l'unité (23), ce qui évite des zones d'eau morte et d'importants volumes de mélange de gaz dans la chambre (7) et garantit une vitesse d'écoulement élevée de l'air, la chambre (7) ayant une forme de sorte que les composants dans cette chambre (7) sont touchés successivement de l'air, et l'air dans la chambre (7) s'écoule depuis des composants froids vers des composants chauds de l'unité (23).

2. Procédé pour l'utilisation d'une unité à piles à combustible (23) suivant la revendication 1, **cractérisé par** le fait que la chaleur provenant de préférence de la réaction électrochimique dans l'ensemble de piles à combustible (1) ou respectivement du préchauffage de l'air, passe dans l'ensemble (1) directement à un circuit de refroidissement intérieur (8).

3. Procédé pour l'utilisation d'une unité à piles à combustible (23) suivant l'une des revendications précédentes, **caractérisé par le fait que** l'ensemble de piles à combustible (1) comprend des piles à effet photomagnéto-électrique.

4. Procédé pour l'utilisation d'une unité à piles à combustible (23) suivant l'une des revendications précédentes, **caractérisé par le fait que** la chambre de dépression (7) est isolée vis-à-vis de l'entourage.
